# EUROPEAN PATENT APPLICATION

(11) **EP 2 330 797 A1**
(43) Date of publication of application: **08.06.2011**
(21) Application number: 09382269.0
(22) Date of filing: 04.12.2009
(51) Int. Cl.: H04L 29/08

(54) **Method for providing presence information in telecommunications systems**

(71) Applicant: Telefónica, S.A., 28013 Madrid (ES)
(72) Inventor: Núñez Diaz, José, Luis, 28013, MADRID (ES); Fullea Carrera, Eduardo, 28013, MADRID (ES); Morón Abad, Rafael, 28013, MADRID (ES)
(74) Representative: Carpintero Lopez, Francisco

(57) **Abstract**

This invention proposes an extension of the standardized closed/unavailable presence status which allows providing additional information of the user, namely his/her willingness to be contacted for a certain service or service type, despite of having in a closed/unavailable presence status, which allows this user to register to the service as well as becoming open/available upon being contacted.

## Description

### TECHNICAL FIELD OF THE INVENTION

The present invention relates to presence-based applications for communication services and, more particularly, refers to provision of means for personalization of communication modes preferred by the service user/subscriber which define the availability and receptivity of contacts to engage in real-time data and voice connections.

### BACKGROUND OF THE INVENTION

With the popularization of Internet and telephony solutions, all kinds of applications and services that enable communication among their users or subscribers have been made available to the public. These communication services include the ones offered by social networks, instant messaging platforms, online gaming, Voice over IP (VoIP), video conferencing and multimedia conferencing (integrating multiple media formats into one system, not just video), to name but a few.

When using those services and their applications, users can be either online either offline. In case that a user is online, more detailed information is usually disclosed, including that he/she is busy, away from the computer or even the song he/she is listening to. This information about the availability status of a particular user is known as presence. The entity -in this case the user- the presence information is about is known as presentity. A user's client provides presence information via a network connection to a presence server, which stores it in what constitutes the personal availability record of this user and can be made available for distribution to other users (called watchers) to convey his/her availability for communication.

Presence information is specified by one or more presence attributes, which may be divided into the following classes: (1) client status; (2) user status; and (3) extended presence information. Client status refers to presence attributes describing the availability of the client for communication, location information, and capabilities of the client. User status refers to presence attributes describing the availability of the user for communication, personal user status, and user information. Extended presence information refers to vendor-specific or service provider dynamically defined non-standard presence attributes that need to be passed through standard presence servers and also includes extension fields to standard presence attributes.

As in the case of many other standards, several standardization bodies take part in the specification of the presence enabler. The basic protocols are defined by the Internet Engineering Task Force (IETF), which has its main focus in the services to be offered in the internet. The 3rd Generation Partnership Projects 3GPP and 3GPP2 contribute to the specification of the practical implementations of IETF specifications in IP Multimedia Subsystem (IMS) and Multimedia Domain (MMD) respectively. The last body in this chain is the Open Mobile Alliance (OMA), whose role is "to create application level specifications for Presence Service. This includes Presence Information semantics and guidelines for presence applications [...]. These specifications shall be agnostic to the underlying network technology, be it specified by 3GPP, 3GPP2, or other organizations".

The OMA bases the concept of presence and its standard enabler Presence SIMPLE (Session Initiation Protocol for Instant Messaging and Presence Leveraging Extensions) in several Requests for Comments (RFC) approved by the IETF. Specifically, the format of the presence documents conforms to the schema specified in RFC 3863: Presence Information Data Format (PIDF). In accordance to PDIF, the following definitions apply:
■ Presence information consists of one or more Presence Tuples, where a Presence Tuples represents a specific service and consists of a series of elements which are defined by the following attributes: (user) status, an optional communication address (including a contact address referred to a URI), and optional other presence markup (RFC 2778, section 2.4 "Formats").
■ Status attribute has at least the mutually-exclusive values OPEN and CLOSED, which have meaning for the acceptance of Instant Messages, and may have meaning for other communication means. There may be other values of status that do not imply anything about Instant Message acceptance. These other values of the status attribute may be combined with OPEN and CLOSED or they may be mutually-exclusive with those values (RFC2778, section 3 "Model"; RFC2779, Sec.4.4.1 - 4.4.3). Status attribute may comprise a single or multiple values (RFC2778, section 2.4).

The aforementioned definitions are focused on instant messaging due to the historical relationship between presence and instant messaging services. Anyway, these should be understood as referred to the availability of any presentity to take part in service sessions, not only messaging.

Some extensions to the Presence Information Data Format are specified in the RFC 4480: Rich Presence Extensions to the Presence Information Data Format. However these extensions do not modify nor extend the meaning and behaviour of the basic Status values, open and closed.

Having a look at popular instant messaging protocols, these statuses also apply: users are either able to be contacted or use a service, or not.

For example, in the case of OMA Instant Messaging and Presence Service (IMPS), an instant messaging and presence enabler, specified prior to OMA IM SIMPLE and OMA PRESENCE SIMPLE, just two different status values are available ("True" and "False"), which are conveyed in a presence attribute called "OnlineStatus" that indicates whether the client is logged on to the IMPS Server or not. In the case of IETF Extensible Messaging and Presence Protocol (XMPP), two different status types are defined, according to the RFC 3921: "Available" status, meaning that the user is able to receive notifications and take part in messaging sessions, which corresponds to the open status; "Unavailable" status, which indicates that the users with that presence status, which matches the closed status, are not able to receive presence notifications, instant messages or become part of voice/chat sessions.

Some XMPP servers handle an additional "Invisible" value, status is not standard up to date, so users with that status type can receive notifications from the available presentities but their status is shown as unavailable to the other contacts. For the "Available" status, it is possible to include a "show" field as child so that additional information of a user in available status can be given but this field is informative and therefore does not have a impact in the behaviour of the system. Possible values for the "show" field are: "Away", "xa" (extended away, for a long time), "dnd" (don't disturb), "chat" (free for chat, willing to be invited to a session).

In summary, current specifications of presence service already comprise several ways of reporting on availability (open status) of the users, which affect the way these users are notified on their fixed (Personal Computers) or mobile terminals (portable computers, mobile phones, PDAs, ...) about a request to establish new sessions or even the way presence updates about their contacts' availability are shown. However, there is no subset of possibilities for the unavailable/closed status to represent more information than said status can mean so far in standardized and non-standardized approaches.

Although the fact of letting all potentially usable applications and services based on presence information running could seem to solve the issue, the user terminals are limited in terms of battery and processing power and therefore cannot be executing all kinds of applications for all sorts of services continuously, since applications using remote services generate network traffic even in case there is no real service consumption. In addition to this, the services lifecycle needs to be refined, because distinguishing only between open and closed statuses leads the applications using a concrete service only need to be running when the user is in an open status for that service. When that user wants to change its status to closed, the application for that service can be closed but, in case the user is willing to become open upon request from other users or according to certain request, this application needs to be previously running, hence, consuming resources. Finally, due to these constraints on the services and applications lifecycles, a closer approach to user presence is needed by enhancing the broadly extended presence model with the suitable mechanisms to overcome these limitations.

In other words, a new status with the meaning "user in closed status in service A, but willing to become open if invited to that service and reachable in that case by means of a wake-up mechanism" is definitely needed.

### SUMMARY OF THE INVENTION

The present invention serves to solve the aforesaid problem by providing automatic means which allow communication services to link presence information with the proper applications and network entities supporting that concrete service and so allow the enhancement of service provisioning and usage.

An aspect of the invention refers to a method for providing presence information in telecommunication systems, which support a plurality of users able to connect with a Presence Server into which users register for sending (publishing) presence information (generating presence subscriptions) and able to receive notifications through the Presence Server on presence information of other users when registration occurs (other possibility in the system is that the user handles presence subscriptions itself by User Agent or Client running in his/her terminal equipment). The method for providing presence information (presence information is a status indicator that conveys ability and willingness of a potential communication partner, -for example, a user-, to communicate with another partner or a plurality of partners and, possibly, use together a service). comprising a step of previously registering a user (via a User Client) to a Presence Server and then publishing a presence status (here and from now on, so-called pre-present status) which indicates the user is unregistered from a specific service but wants to register to it under invitation. After the publishing of pre-presence status, the method can notify to the just registered user about presence information of at least one watcher (another user in his/her list of contacts and also previously registered to said presence server).

The invention described here represents an extension of the standardized closed/unavailable presence status which allows providing additional information of the user: his/her willingness to be contacted for a certain service or service type, despite of having in a closed/unavailable presence status, which allows this user to register to the service as well as becoming open/available upon being contacted. For example, applying this invention in a gaming service allows a user to indicate that, although he is not currently connected to the gaming server, the user is willing to be contacted in case somebody wants to invite him to a gaming session and become open in the suitable service. Note that the extended status proposed here is different from the invisible status of XMPP, where the user is indeed registered to the service but hiding this fact to his/her contacts; unlike the status defined by the invention, with the user not registered to the service but letting his/her contacts know that, upon request from any of them, the user can become registered and connected to the requesting contact through the suitable server.

A user can be in a closed status with a closed presence also for concrete services, but able to start the corresponding application and therefore reach an open status when contacted. Following the IM example, this user can appear as offline with a clear indication to be notified to his/her terminal equipment (TE) when receiving an offline message, and this TE is able, in turn, to start the corresponding application for that service, register to it and set its presence status as open.

Therefore the user configuring his/her presence information by using this invention does not need to be registered neither to the presence server nor to the specific service, which he/she is pre-present at. This can imply considerable savings in terms of network resources. It must be noted though that this approach requires a mechanism to wake-up the application at the client side.

From the user point of view, this flexibility introduced by the extension of the statuses defined by the invention allows users to enjoy a better experience when using communication services. Enabling users to have more flexibility about how to manage their closed status leads to the fact that most advantages of the invention relates to user experience. The present approach prevents data traffic from being wasted in order to maintain an association with a service that is not being consumed. Besides that, energy consumption is reduced by shutting down the terminal applications and network services when they are not needed, increasing the life of batteries in the terminal side and the operational expenditures in the network one.

The proposed invention has a major advantage, on the one hand, of establishing a more flexible framework for presence where users can fine-tune, by redefining the concept of closed status (with a pre-presence concept), the views that others have about their availability depending on the services they want to use. On the other hand, the invention also extends the granularity the open status has to the closed status by adding subsets of intermediate statuses or service type related presence statuses as well as contacts related ones. This contributes to the specification of any mechanism for users to change their status upon request from others promotes service consumption in conditions that could not be possible through current standardized methods. In fact the scenarios depicted in the next sections are not possible without the pre-presence concept described before. As a matter of a fact, no invitation to a service can be successfully sent to a user that is not available in that service.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows a flow diagram of the steps for presence information provisioning in a two-user scenario for using a communication service, according to a possible implementation of the invention.
Figure 2. - It shows a flow diagram of the steps for presence information provisioning in a two-user scenario, both users at pre-present status, for inviting to use a communication service with a user open at this service, according to another possible implementation of the invention.

### DETAILED DESCRIPTION OF THE INVENTION

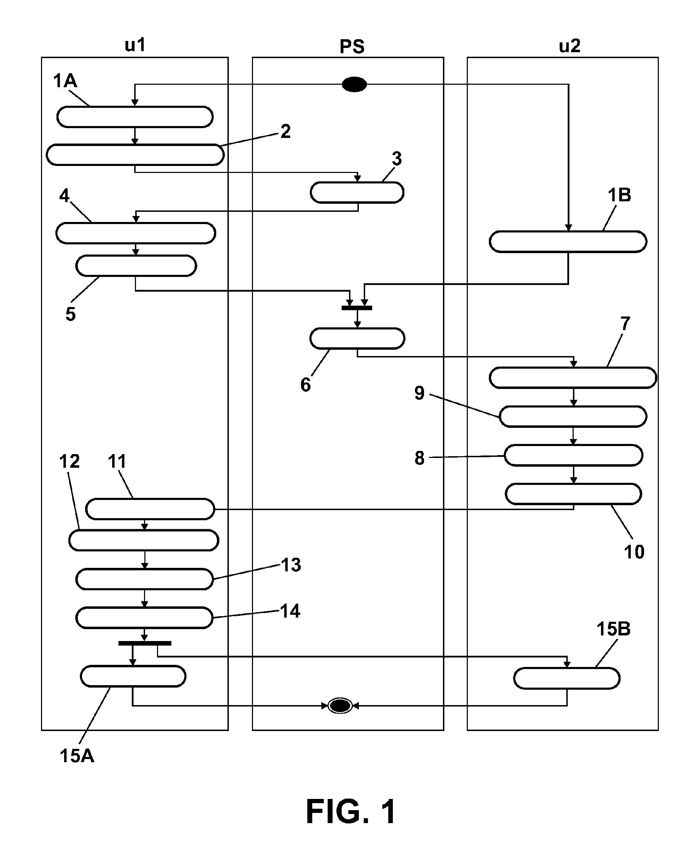

The flow chart of Figure 1 corresponds to a possible scenario of service consumption between two parties: a first user (u1) whose personal information is to be provided constituting a presentity and a second user (u2) which is a watcher. The presentity may be considered available if there is at least one user agent or client ready to accept a notification of presence of watchers in the system. The first user (u1) has a contact list of other users who can be possible watchers. In order to illustrate the invention, the scenario shows the following steps of use case in which both users register to a presence server (PS):
(1A) At a specific point of time, the first user (u1) registers to the presence server (PS) and sets his/her presence status for a service to pre- present, meaning that he/she is willing to register to the service and thus change his/her status from closed to open when an invitation for that service is received.
(2) This pre-presence status, or contact information in a IM service for instance, is published by the client started at the first user (u1).
(3) After publishing the presence status and received such presence information by the presence server (PS), said presence server (PS) responds with a notification containing presence information of the users in the contact list, i.e., watchers' info, and sends it to the first user (u1).
(4) The first user (u1) receives the presence information of all the contacts in his/her contact list.
(5) This first user (u1) may at this point de-register from the presence server without involving any change in the pre-present status at the service.
(1 B) At a later point in time, a second user (u2) registers to the presence server (PS) and so can see that the first user (u1) is pre-present at the specific service by the following steps:
(6) Prompted by the registration of the second user (u2), the presence server (PS) notifies the presence by replying with presence information of the first user (u1).
(7) The second user (u2) receives the notification on the pre-present status of the first user (u1), among present information of other contacts of this second user (u2) possibly.
(8) The second user (u2) registers or subscribes to a specific communication server and sets his/her presence status to open for that specific communication service.
(9) The second user (u2) publishes the open status for the specific communication service.
(10) Then, the second user (u2) decides to invite the first user (u1) to a service session.
(11) Upon reception of the invitation from the second user (u2), the first user (u1) is prompted whether to accept the invitation or not.
(12) If the first user (u1) accepts the invitation, a client is started at the terminal equipment of the first user (u1) and registers/subscribes to the same communication server.
(13) As the second user (u2) did, the first user (u1) publishes the open status for the service at the presence server.
(14) Then the notification of invitation acceptance is sent back from the second user (u2) to the first one (u1).
(15A, 15B) Both users (u1, u2) start consuming the service.

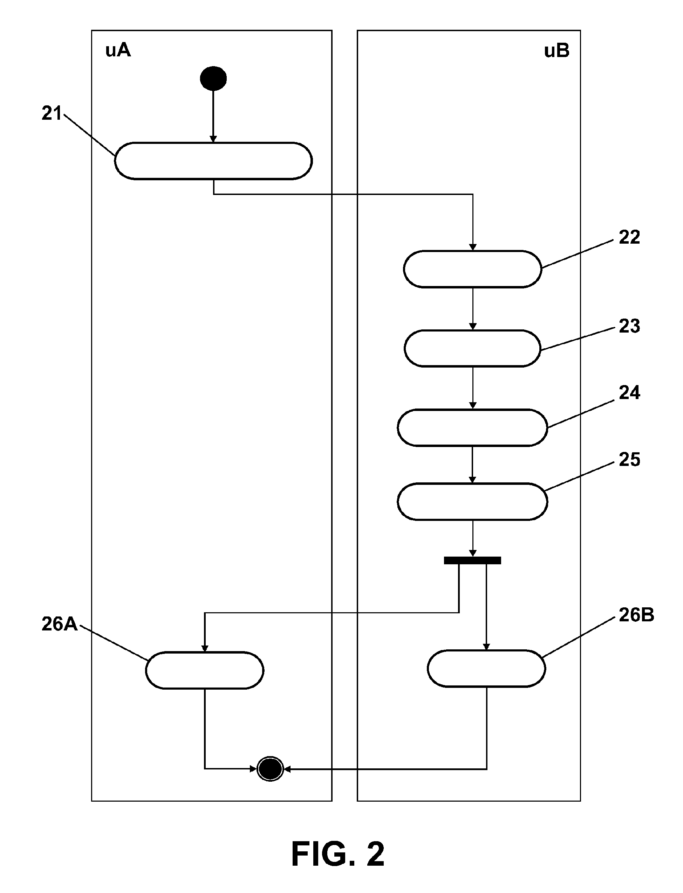

There are other possible scenarios where two users can publish their respective pre-present statuses, indicating that both are willing to be invited to a specific service, as the example illustrated in Figure 2. In any case, at least one of the users must be registered to the presence server (PS) in order to know the other user's availability and, prior to making an invitation to a service, that user has to register at the presence server with an open status for at least said specific service. In Figure 2 left and right columns represents respectively the User A's and User B's clients (u1, u2), both of them comprising the presence client -presence source and watcher- and the service client for which a user is pre-present, in this case, user B (uB). In the example of Figure 2, user A (uA) has previously published a pre-present status but remains registered at the presence server (PS) with open status for other services. Thus, as a starting point, user A (uA) is registered to the service and with an open status at the presence server for said specific service or, otherwise, would register and set the open status before sending the invitation, while User B (uB) is pre-present for this service and maybe for all the other services. The following steps take place in the activity model shown in Figure 2:
(21) User A (uA) decides to invite User B (uB) to a service session.
(22) Upon reception of the invitation, User B (uB) is prompted whether to accept the invitation or not.
(23) If User B (uB) accepts the invitation, the client is started at User B's device and then registers to the service.
(24) User B (uB) publishes his/her presence: the presence status becomes also open for User B (uB), as User A (uA) is, with respect to the service for which User B (uB) is invited by User A (uA).
(25) User B (uB) responds to User A (uA) sending a notification of acceptance of the invitation.
(26A, 26B) Both users (uA, uB) start consuming the service.

For the implementation of the pre-present status, three different embodiments of the invention are presented as follows:

### Embodiment ― Option 1

One of the options is implementing the pre-presence concept in SIMPLE by defining a new value for the <status><basic>attribute, in addition to open and closed statuses. This new value of presence status can be "open-upon-request" and means that, in case an invitation is received for the service represented by a tuple in SIMPLE format, the client registers to the service, switches the presence status to open and become available for that service. This is illustrated in the following presence tuple:

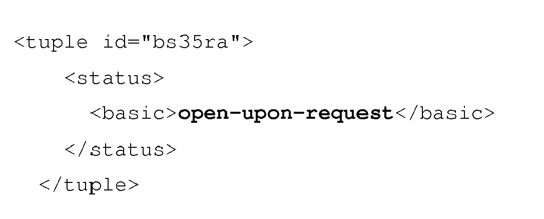

The "open-upon-request" value indicates the pre-presence usage, as the presentity is disclosing information related to presence before providing a presence document with an open status.

This implementation can be a handicap in terms of backward compatibility as the new status value "open-upon-request" may be an issue for legacy clients not supporting this feature. It seems better to restrict the <status><basic> value, to open and closed, so that the clients in the field can understand it, and convey the pre-presence information as an extension in a separate field, that can be dismissed by legacy clients. Along these lines the following embodiment options are preferable.

### Embodiment - Option 2

A second implementation option for the pre-presence concept in SIMPLE is to keep the <status><basic> value, to open and closed, as of today, and indicate the pre-presence status in an extended presence attribute, here so-called prepresence. This new attribute is included only with value open-upon-request in case the user is pre-present, in which case the <status><basic> attribute has the closed value. This is illustrated in the following presence tuple:

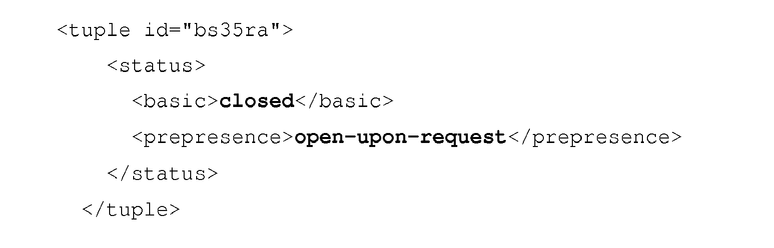

It should be noted that this implementation complies with the Status value extension conventions specified for PIDF in RFC 3863. This embodiment is the preferred one as it maximizes the backward compatibility with implementations already in the field. In fact existing presence user clients, which cannot interpret the pre-presence feature can consider the pre-present users as unavailable (status set to closed).

### Embodiment - Option 3

Another possible approach, quite aligned to what is currently being specified by OMA, is using the <willingness><basic> presence attribute, defined in the OMA Presence SIMPLE Data Extensions, with value open in combination with a <status><basic> attribute with value closed. This implementation is valid though for the implementations based on OMA SIMPLE enabler specifications disclosed in OMA PRESENCE SIMPLE V 2.0 Candidate Enabler Release and, as the previous embodiment, can also be regarded as backward compatible with existing implementations. An example of this implementation option is shown in the following presence tuple:

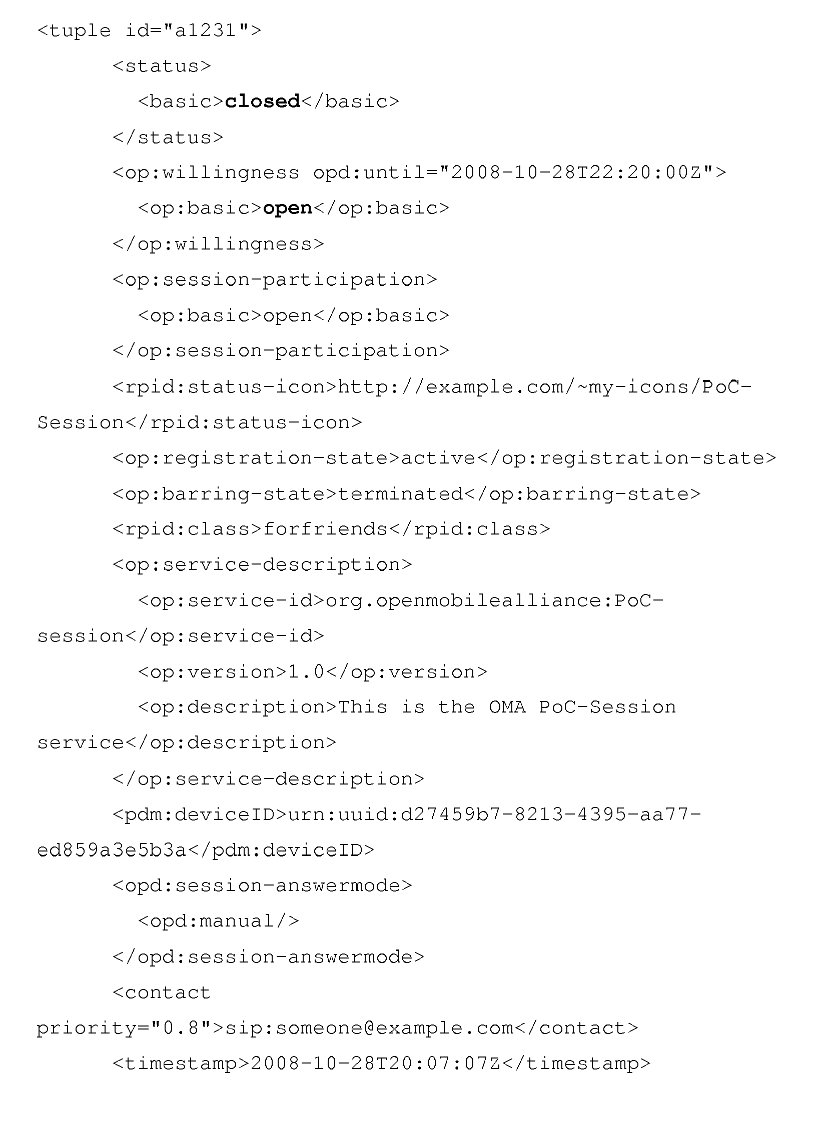

In this example, the user indicates that he/she is in closed status, but willing to become available if a request for the service is received, e.g., PoC service in this case.

The combination of presence attribute values in this implementation of the invention does not interfere with the current use of the <willintness><basic> attribute, whose common use is limited to the case when the <status><basic> attribute is open, to indicate the desire to receive incoming communication requests for the specified service. It should be noted though that the presence data model allows for the combination of values that is proposed for the pre-presence status, but no specific meaning or behavior is defined for that case. Hence, just the clients supporting prepresence interpret this combination of values as explained in this invention and the rest regards the pre-present user as unavailable for the specific service, i.e. they disregard the value of the <willingness><basic> presence attribute and the behavior is defined by the <status><basic> attribute set to closed.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. - Method for providing presence information in telecommunication systems, comprising:
- registering a first user to a presence server;
**characterized by** further comprising:
- setting and publishing a presence status which indicates the first user is unregistered from a specific service and wants to register to the specific service under invitation;
- receiving notification from the presence server to the first user containing presence information of at least a second user.

2. - Method according to claim 1, further comprising, if the second user is registered to the specific service and the first user accepts an invitation from the second user to the specific service, registering the first user to specific service and publishing a presence status which indicates the first user is active at the specific service.

3. - Method according to any preceding claim, further comprising, after reception by the first user of notification from the presence server containing presence information of the, at least one, second user, deregistering the first user from the presence server.

4. - Method according to any preceding claim, wherein the specific service is selected from instant messaging, video conferencing, multimedia conferencing, voice over IP, social networking, online gaming and any other communication service whose presence information is handled by a presence server.

5. - Method according to any preceding claim, wherein the presence status indicating the first user is unregistered from a specific service and wants to register to the specific service under invitation is set by defining a value of user status in the Presence Information Data Format.

6. - Method according to any claim 1-4, wherein the presence status indicating the first user is unregistered from a specific service and wants to register to the specific service under invitation is set by defining a value of an extended presence attribute in the Presence Information Data Format, having a user status set to a closed value indicating the first user is inactive for the specific service.

7. - Method according to any claim 1-4, wherein the presence status indicating the first user is unregistered from a specific service and wants to register to the specific service under invitation is set by defining a value of a willingness presence attribute specified in the Presence SIMPLE Data Extensions by the Open Mobile Alliance, having a user status set to a closed value indicating the first user is inactive for the specific service.

8. - A computer program comprising program code means adapted to perform the steps of the method according to any claims from 1 to 7, when said program is run on a general purpose processor, a digital signal processor, a FPGA, an ASIC, a micro-processor, a micro-controller, or any other form of programmable hardware.
